Europäisches Patentamt

European Patent Office

Office européen des brevets

(19)

(11) Publication number: **0 128 311**
A1

# EUROPEAN PATENT APPLICATION

(12)

(21) Application number: **84104648.5**

(22) Date of filing: **25.04.84**

(51) Int. Cl.³: **F 16 H 3/54**, F 02 B 67/04

(30) Priority: **09.06.83 US 502803**

(43) Date of publication of application: **19.12.84** Bulletin 84/51

(84) Designated Contracting States: **DE FR GB IT**

(71) Applicant: **Canadian Fram Limited, 540 Park Avenue East P.O. Box 2014, Chatham Ontario N7M 5M7 (CA)**

(72) Inventor: **Mason, Murray Richard, RR No. 2, Kent Bridge Ontario, N0P 1V0 (CA)**

(74) Representative: **Brullé, Jean et al, Service Brevets Bendix 44, rue François 1er, F-75008 Paris (FR)**

(54) **Overdrive two-speed accessory drive.**

(57) An overspeed drive unit (10) having two concentric shafts (32, 68) separated by a roller clutch (80) and having a planetary gear set. A disk (120) of a disk brake (26) is connected to and rotatable with the ring gear (46) of the gear set (48). The outer shaft (32) of the two shafts is either driven at the speed of the other shaft (68) or driven at an accelerated rate through the gear set during intervals when the disk (120) is fixed.

EP 0 128 311 A1

-1-

# OVERDRIVE TWO-SPEED ACCESSORY DRIVE

## Background and Summary of the Invention

This invention relates to a drive system for controlling the speed at which engine accessories are driven. More particularly, the drive permits the accessories to be driven at a slower than normal speed during low accessory demand periods and at a higher predetermined speed during heavy accessory demand periods.

To extend the useful life of accessories driven by the engine and to reduce parasitic power losses, it is desirable to drive such accessories at reduced speeds during intervals when maximum accessory output is not required. In addition by reducing parasitic drag on the engine a significant improvement in fuel economy and performance will be achieved. Accessory devices can operate satisfactorily at slower rotational speeds but may require operation at accelerated speeds during high demand intervals. As such, it is desirable to provide an accessory drive that is capable of driving these accessories during a greater percentage of the operative duty cycle at a lower rotational speed and to provide means for accelerating the rotational speed of the accessories to a faster second speed during high demand periods. Two-speed accessory drives are known to those skilled in the art. These devices often take the form of electromagnetically activated clutches. These electromagnetic devices require close tolerances such that the magnetic forces generated upon activation can be properly directed through its various metallic components which form a magnetic path. The close and exacting tolerances required by these electromagnetic devices result in an increased cost of the unit and yield a susceptibility to degraded performance if these tolerances vary due to the wear of the device's component parts. The present invention provides a simple two-speed accessory drive that reduces the parasitic losses, by utilizing a planetary gear set linked to an external breaking device and having mounted therein a roller clutch to control the speed of a plurality of output pulleys. More particularly, the invention comprises: an overspeed drive system adapted to be driven by a rotating member such as a crankshaft of an engine comprising a first shaft mounted for rotation relative to a central axis; a second shaft concentrically mounted relative to the first shaft and supported rotationally about the first shaft; pulley means mounted to and rotatable with the second shaft; a planetary gear set for driving the second shaft at a speed greater than the speed of the first shaft while a member of the planetary gear set is fixed; roller clutch means mounted between the first and the second shafts for permitting the second shaft to be driven by the first shaft during intervals when the planetary gear is not fixed and for permitting the second shaft to overdrive relative to the first shaft during other intervals; and means for selectively engaging the planetary gear set in response to engine parameters.

## Brief Description of the Drawings

In the drawings:

FIGURE 1 illustrates a partial cross-sectional view of the invention.

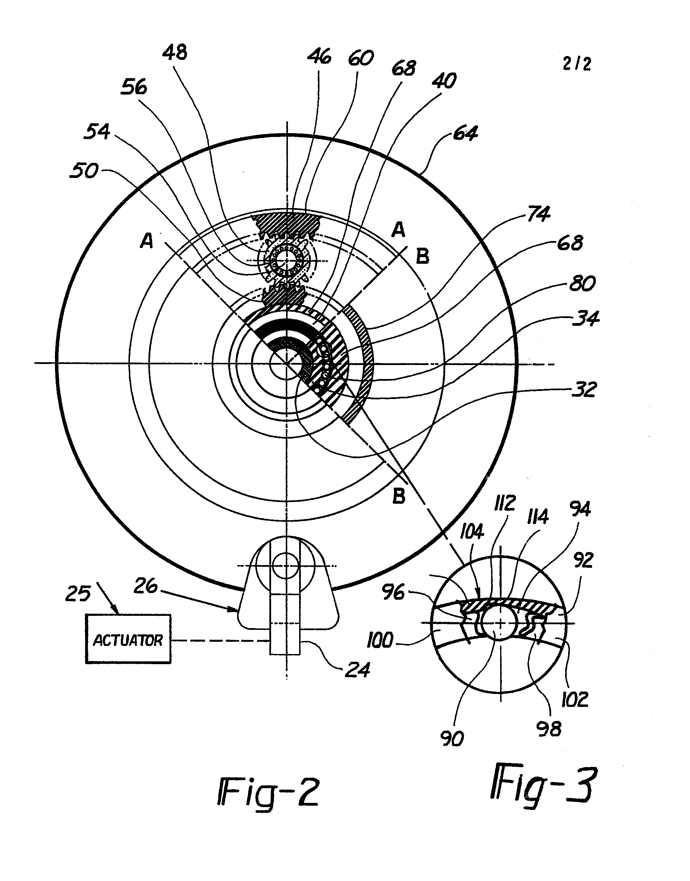

FIGURE 2 illustrates two partial sectional views taken through the sections A-A and B-B of FIGURE 1.

FIGURE 3 illustrates a break-out view of part of a roller clutch.

## Detailed Description of the Drawings

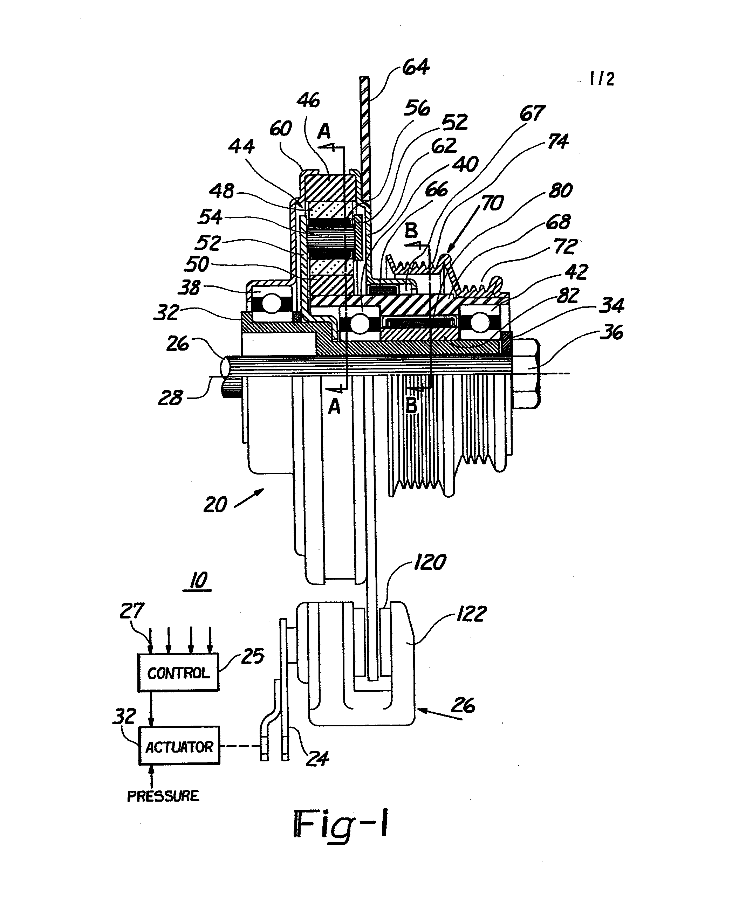

With reference to the accompanying FIGURES there is shown a two-speed accessory drive system 10 comprising an overdrive unit or drive 20 activated by actuator 22. The actuator 22 may be a vacuum motor or electrical device capable of moving a lever 24 to activate a disk brake mechanism 26 of a known type. The actuator may be controlled by a controller 25 in response to various engine parameters sensed by a set of sensors 27. The lever 24 may be necessary to supply additional mechanical advantage to the disk brake 26 if a low torque actuator 22 is utilized. The drive system 20 is adapted to be mounted directly to a rotating member of the engine such as its crankshaft (not shown). The drive 20 may be attached to the crankshaft by a bolt 29. The bolt 29 is aligned to a central axis 28 that supports a concentric shaft 32 which has at its right end, as viewed in FIGURE 1, a spacer 34 sandwiched between one end of the concentric shaft 32 and the head 36 of the bolt 29. The shaft 32 supports three ball bearings 38, 40 and 42 which as detailed below support various rotating members.

The drive 20 further includes a planetary gear set or overdrive drive 44 comprising a ring gear 46, a plurality of pinion or planetary gears 48, only one of which is illustrated in the accompanying FIGURES and a sun gear 50. Each of the pinion or planetary gears is attached to a carrier member 52. Each of the pinion or planetary gears 48 is mounted to the carrier 52 by a respective pin 54 and roller bearing 56. The pinion gears 48 interconnect the ring gear 46 with the sun gear 50. The planetary gear set 44 comprising the above-noted ring gears 46, planetary gears 48 and sun gear 50 is covered by a back cover 60 and front cover 62 which are attached to and rotatable with the ring gear 46. The back cover 60 is supported for rotation relative to shaft 32 by bearing 38. The front cover 62 is supported for rotation by a roller bearing 66 that is mounted concentric to the central axis 28. A bearing seal 67 may be provided adjacent the roller bearing 66. The roller bearing 66 is supported by a hub or second shaft 68. The hub 68 is supported for rotation relative to the shaft 32 and axis 28 by the bearings 40 and 42. As illustrated in FIGURE 1, the hub 68 supports an output pulley member 70 which, as illustrated, comprises a small diameter pulley 72 and a larger diameter pulley 74. The number of pulleys may vary with the application.

A roller clutch 80 of a known type is supported relative to shaft 32 by a sleeve 82. The sleeve 82 is mechanically fixed to and rotates with the shaft 32. The roller clutch 80 provides a driving link between sleeve 82 and the hub 68. As more specifically illustrated in the brake-out view of a roller clutch in FIGURE 3, the roller clutch 80 comprises a plurality of rollers 90 mounted for rotation within a bearing retainer 92. More particularly, each roller 90 is mounted within a cavity 94 formed by arcuate members 96 and 98 supported by the respective walls 100 and 102 of the bearing retainer 92. The lateral spacing between the members 96 and 98 loosely support its respective roller 90 within its respective cavity 94 permitting the roller to rotate and move laterally relative to the members 96 and 98. The bearing retainer 92 further includes a retaining member 104 supported by members 96 and 98 and by the respective walls 100 and 102 of the retainer 92 to provide a variable height dimension to each respective cavity 94. Each retainer member 104 includes a first portion 110 having a predetermined thickness. The first portion 110 is supported on member 96 and terminates at shoulder 112. The

-5-

second portion 114 of the retainer member 104 has a variable cross-section. The portion 114 is supported on one side by member 98 and mates with portion 110 proximate the shoulder 112.

The drive 20 further includes a disk 64 preferably constructed of steel or suitable material that is mounted to and rotatable with the front cover 62 and ring gear 46. The disk 64 is fitted within the brake pads 120 that are supported by the brake caliper 122.

In operation the drive unit 20 will be rotated by the action of its shaft 32 in unison with the engine crankshaft (not shown). Under normal operating conditions, that is, with the actuator 22 not activated, the disk 64 is free to rotate relative to the brake pads 120. In this manner the output pulley member 20 is driven through the roller clutch 80. By virtue of providing a plurality of output pulleys 72 and 74 speed reduction during this normal mode of operation can be accomplished by linking accessories by fan belts (not shown) to the output pulley 72 or 74. During this mode of operation the planetary gear set 44, which is also coupled to shaft 32, freewheels and does not supply torque to the hub or second shaft 68.

When it is desired to have the drive 20 drive the accessories at an increased speed, the actuator 22 is activated by the controller 27 thereby causing the disk brake 26 to lock and hold the disk 64. Since the ring gear 46 is directly connected to the disk 64 by virtue of their mutual connection to the front cover, the act of locking the disk 64 in turn locks and prevents the ring gear 46 from rotating . With the ring gear 46 now locked in place, the planetary carrier 52 which is connected directly to the input shaft 32 will overdrive the sun gear 50 at a speed faster than the speed of the concentric shaft 32 which is driven at crankshaft speed. Since the sun gear is mechanically connected to the hub or shaft 82, the output pulleys 72 and 74 are driven at an accelerated speed. During this accelerated speed mode of operation the roller clutch permits the second shaft or hub 68 to overdrive relative to the sleeve 64 and in this manner the roller clutch 80 allows the second shaft 68 to run faster but not slower than the speed of a crankshaft.

Many changes and modifications in the above-described embodiment of the invention can of course be carried out without departing from the scope thereof. Accordingly that scope is intended to be limited only by the scope of the appended claims.

Claims:

1. An overspeed drive system (20) adapted to be driven by a rotating member such as a crankshaft of an engine comprising a first shaft (32) mounted for rotation relative to a central axis (28); a second shaft (68) concentrically mounted relative to said first shaft and supported rotationally about said first shaft;

planetary gear means (48) for driving said second shaft (80) at the speed greater than the speed of said first shaft during intervals when a member of said planetary gear is fixed from rotating or engaged;

means (12, 27) for selectively engaging said member in response to engine parameters; and

means (80) mounted between said first and said second shafts for permitting said second shaft to be driven by said first shaft during intervals when said member is not engaged and for permitting said second shaft to overdrive relative to said first shaft during other intervals.

2. The system as defined in Claim 1 wherein at least one output pulley (70, 72, 74) is attached to said second shaft (68).

3. The system as·defined in Claim 2 wherein said engaging means comprises a disk brake (26) including a disk (64) operatively connected to and rotable with said planetary gear means.

4. The system as defined in Claim 3 wherein said engaging means further comprises:

a disk brake caliper (122) supporting a plurality of disk pads (120) for engaging said aisle (64);

lever means (24) for causing said disk pads (120) to move into engagement with said disk (64); and

actuator means (22, 25) for engaging and moving said lever means.

5. The system as defined in Claim 4 wherein said actuator means includes:

an actuator (22) responsive to control signals input thereto and mechanically connected to said lever means; and

control means (27) for generating said control signals in response to at least one engine operating parameter.

6. The system as defined in Claim 1 wherein said planetary gear means comprises:

a sun gear (50) concentrically mounted to said second shaft (68);

a plurality of pinion or planetary gears (48) mounted for engagement with said sun gear (50);

a pinion or planetary carrier (52) for supporting said planetary gears (64) in engagement with said sun gear, and connected to and rotatable with said first shaft (32);

a ring gear (46) mounted about said planetary gears (48) in engagement therewith; and

ring gear support means (60, 62, 38, 66) for rotationally supporting said ring gear (46) relative to said first (32) and said second (68) shafts.

7. The system as defined in Claim 6 wherein said disk (64) is attached to and rotatable with said ring gear (46).

8. The system as defined in Claim 6 wherein said ring gear support means comprises front (60) and back (62) covers attached to said ring gear (48) and extending radially inwardly in surrounding relation relative to said planetary gear means, and including a first bearing (38) for rotationally supporting said front cover (60) about said first shaft (32) and a second bearing (40) for rotationally supporting said back cover (62) about said second shaft (62).

9. The system as defined in Claim 1 wherein said last named means includes a roller clutch.

0128311

- 1/2

10

27

CONTROL — 25

32

ACTUATOR - - - - 24

PRESSURE

Fig-1

0128311

2/2

Fig-2

Fig-3

ACTUATOR

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 801 812 (DAIMLER-BENZ) * Complete document * | 1,2,6 | F 16 H 3/54 F 02 B 67/04 |
| A | | 3,5 | |
| X | GB-A-2 091 357 (BORG-WARNER CORP.) | 1-3,6, 9 | |
| A | | 5,8 | |
| A | US-A-3 763 978 (CROOKS) * Figure 1, references 74, 70 * | 3,4 | |

TECHNICAL FIELDS
SEARCHED (Int. Cl. ³)

F 16 H 3/00
F 16 H 5/00
F 16 H 55/00
F 02 B 67/00

The present search report has been drawn up for all claims

| Place of search | Date of completion of the search | Examiner |
|---|---|---|
| BERLIN | 22-08-1984 | LEMBLE Y.A.F.M. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03 82